# FASCICULE DE BREVET EUROPEEN

(11) **EP 2 648 945 B1**
(45) Date de publication et mention de la délivrance du brevet: **10.06.2015**
(21) Numéro de dépôt: 11794697.0
(22) Date de dépôt: 07.12.2011
(51) Int. Cl.: B60S 1/48

(54) **DISPOSITIF D'ESSUIE-GLACE ET DE LAVE-GLACE**
WINDSCHUTZSCHEIBENWISCHER UND SCHEIBENWASCHVORRICHTUNG
WINDSHIELD WIPER AND WINDSHIELD WASHER DEVICE

(30) Priorité: 10.12.2010 FR 1060349
(43) Date de publication de la demande: 16.10.2013
(73) Titulaire: Renault S.A.S., 92100 Boulogne-Billancourt (FR)
(72) Inventeur: VERNEUIL, Pascal, F-78460 Chevreuse (FR)
(86) Numéro de dépôt international: PCT/EP2011/071994
(87) Numéro de publication internationale: WO 2012/076562

(56) Documents cités:
- WO-A1-2010/043382
- FR-A1- 2 679 851

## Description

La présente invention se rapporte à un dispositif d'essuie-glace et de lave-glace pour pare-brise de véhicule automobile permettant d'améliorer l'efficacité du lavage et de l'essuyage. Le document WO 2010/043382 décrit un dispositif selon le préambule de la revendication 1.

Les dispositifs d'essuie-glace et de lave-glace connus destinés à être installés entre le pare-brise et le capot avant des véhicules, comportent d'un côté des balais supportés par des bras pour les entraîner en frottement contre le pare-brise et d'un autre côté des gicleurs et une pompe d'alimentation en liquide de lavage pour projeter ledit liquide à travers les gicleurs orientés vers le pare-brise. Les bras sont en général au nombre de deux et ils sont montés sur deux arbres d'entraînement correspondant qui viennent en saillie entre le capot avant et le pare-brise selon une direction sensiblement perpendiculaire à ce dernier. Ces arbres d'entraînement sont entraînés en rotation alternative avec une amplitude d'environ un quart de tour, de manière à entraîner alternativement les balais entre une position située le long du bord inférieur du pare-brise et une position sensiblement perpendiculaire à ce même bord. La position d'arrêt et de repos des balais correspond à la position où les balais s'étendent le long du bord inférieur du pare-brise. Les arbres d'entraînement sont mus par une motorisation électrique commandée par un circuit de commande. Ce dernier comprend en outre un contacteur séquentiel permettant d'alimenter la motorisation électrique durant le temps de retour des balais vers leur position de repos.

S'agissant du liquide de lavage projeté à travers les gicleurs, la pompe d'alimentation est commandée par un autre circuit de commande comprenant généralement un bouton-poussoir. Ainsi, le liquide de lavage n'est projeté que lorsque l'on maintient enfoncé le bouton-poussoir. Dès lors qu'on le relâche, la pompe d'alimentation est stoppée. Ainsi, on économise le liquide de lavage. La seule appréciation du conducteur permet de doser la quantité de liquide de lavage nécessaire et l'instant précis auquel il doit être projeté en fonction de la position des balais d'essuie-glace. Cependant, l'optimisation d'une telle projection de liquide de lavage requiert une certaine habileté.

Aussi, un problème qui se pose et que vise à résoudre la présente invention est de fournir un dispositif d'essuie-glace et de lave-glace qui permette précisément d'ajuster la projection du liquide de lavage sur le pare-brise pour un lavage optimal.

Dans le but de résoudre ce problème, la présente invention propose un dispositif d'essuie-glace et de lave-glace de véhicule automobile comprenant, d'une part, des balais et une motorisation pour entraîner lesdits balais en mouvement alternatif entre deux positions de point mort opposées, lesdits balais décrivant une surface d'essuyage entre lesdites deux positions, et d'autre part, des gicleurs destinés à être orientés vers ladite surface d'essuyage et une pompe d'alimentation desdits gicleurs en liquide de lavage pour projeter ledit liquide de lavage vers ladite surface d'essuyage, ledit dispositif d'essuie-glace et de lave-glace comprenant en outre, un premier circuit de commande pour commander ladite motorisation, et un second circuit de commande pour commander ladite pompe, ledit second circuit de commande présentant un contacteur activable pour alimenter ledit second circuit de commande en courant électrique. Selon l'invention, lesdits circuits de commande sont couplés électriquement l'un avec l'autre ; et ladite pompe est commandée lorsque ledit contacteur est activé et que simultanément lesdits balais sont dans au moins une desdites deux positions de point mort.

Ainsi, une caractéristique de l'invention réside dans la mise en oeuvre d'un couplage électrique entre les deux circuits de commande de manière à ce que la pompe d'alimentation en liquide de lavage ne puisse être commandée qu'à la seule double condition que le contacteur soit activé et que les balais soient dans l'une des positions de point mort. De la sorte, l'injection du liquide de lavage sur le pare-brise intervient uniquement lorsque les balais sont dans l'une ou l'autre des positions extrêmes de point mort, et que le contacteur est activé. Si le contacteur est activé lorsque les balais sont en mouvement entre les deux positions de point mort, le fonctionnement de la pompe d'alimentation interviendra à l'instant où les balais atteindront ladite au moins une desdites deux positions de point mort. Par conséquent, le conducteur n'a plus à se concentrer sur cet instant précis où les balais atteignent ladite position de point mort pour agir sur le contacteur. Au surplus, le liquide de lavage est délivré à l'instant précis où le besoin apparaît, et non pas avant, ce qui permet d'économiser du liquide.

Par ailleurs, on observera que lorsque les balais sont au repos dans l'une des positions extrêmes de point mort, et que le seul contacteur est activé, non seulement la pompe d'alimentation en liquide de lavage est commandée, mais au surplus, ladite motorisation l'est également pour entraîner les balais en mouvement. On présentera ci-après dans la description détaillée un mode de réalisation pour mettre en oeuvre cette fonction.

Selon un mode de mise en oeuvre de l'invention particulièrement avantageux ledit second circuit de commande comporte un relai électromagnétique pour commander ladite pompe, ce qui permet précisément de fiabiliser la commande. En effet, les deux circuits de commande étant reliés électriquement, la modification d'un état électrique du premier circuit de commande permet d'actionner le relais électromagnétique.

Par ailleurs, ledit relai électromagnétique est avantageusement un relai temporisé. Aussi, dès lors que les balais en mouvement reviennent dans ladite au moins une desdites deux positions de point mort pour en repartir aussitôt, le relais temporisé peut rester actif pendant une durée réglable et ainsi faire fonctionner la pompe d'alimentation en liquide de lavage alors que les balais ont quitté ladite au moins une desdites deux positions de point mort. Ainsi, le liquide de lavage est injecté sur le pare-brise durant le mouvement des balais. Préférentiellement, la durée de temporisation dudit relai temporisé est inférieure ou égale à la demi-période de mouvement desdits balais. De la sorte, le liquide de lavage est projeté sur le pare-brise durant un temps correspondant sensiblement à la seule montée des balais.

Au surplus, et ainsi qu'on l'expliquera plus en détail dans la suite de la description, ledit second circuit de commande comporte une diode entre ledit relai électromagnétique et ledit premier circuit de commande de manière à éviter les retours de courants induits vers le moteur électrique permettant d'entraîner les balais.

Par ailleurs, ledit premier circuit de commande présente un contacteur séquentiel destiné à faire varier le potentiel électrique dudit second circuit de commande lorsque lesdits balais sont entraînés d'une position située entre lesdits points morts à ladite au moins une desdites deux positions de point mort. De la sorte, c'est grâce à cette variation de potentiel que la pompe d'alimentation sera entraînée, dès lors que le contacteur est également activé. Le premier circuit de commande équipé du contacteur séquentiel est usuellement installé sur les véhicules automobiles de moyenne et de bas de gamme pour alimenter un moteur électrique autonome d'entraînement des balais. En conséquence, moyennant une modification mineure du second circuit de commande avec l'intégration d'un relais électromagnétique et le couplage des deux circuits de commande, on obtient un dispositif conforme à l'invention peu onéreux qui peut précisément être mis en oeuvre sur les véhicules automobiles de moyenne et de bas de gamme.

Ledit contacteur séquentiel présente préférentiellement des pistes circulaires conductrices solidaires et des linguets de contact correspondants, lesdites pistes étant destinées à être entraînées en rotation de 360° lorsque lesdits balais sont entraînés en mouvement durant une période correspondant à un aller et retour des balais. Ainsi qu'on l'expliquera ci-après, le contacteur présente trois pistes circulaires et trois linguets de contact correspondant. Durant la rotation des pistes circulaires, les trois linguets de contact vont être séquentiellement couplés électriquement deux à deux.

De plus, ladite au moins une desdites deux positions de point mort est une position dans laquelle lesdits balais sont aptes à venir s'étendre au repos. Aussi, la pompe d'alimentation en liquide de lavage peut être actionnée et le liquide projeté sur le pare-brise, lorsque les balais sont au repos, simplement en activant le contacteur activable. En outre, selon une variante de réalisation, lesdits gicleurs sont montés solidaires desdits balais d'essuyage de manière à ce que le liquide de lavage soit projeté sur le pare-brise dans une position relative donnée avec les balais.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1A est une vue schématique d'un premier circuit de commande conforme à l'invention ;
- la Figure 1B est une vue schématique d'un élément du premier circuit de commande représenté sur la figure 1A ; et,
- la Figure 2 est une vue schématique d'un second circuit de commande d'un ensemble de lave-glace.

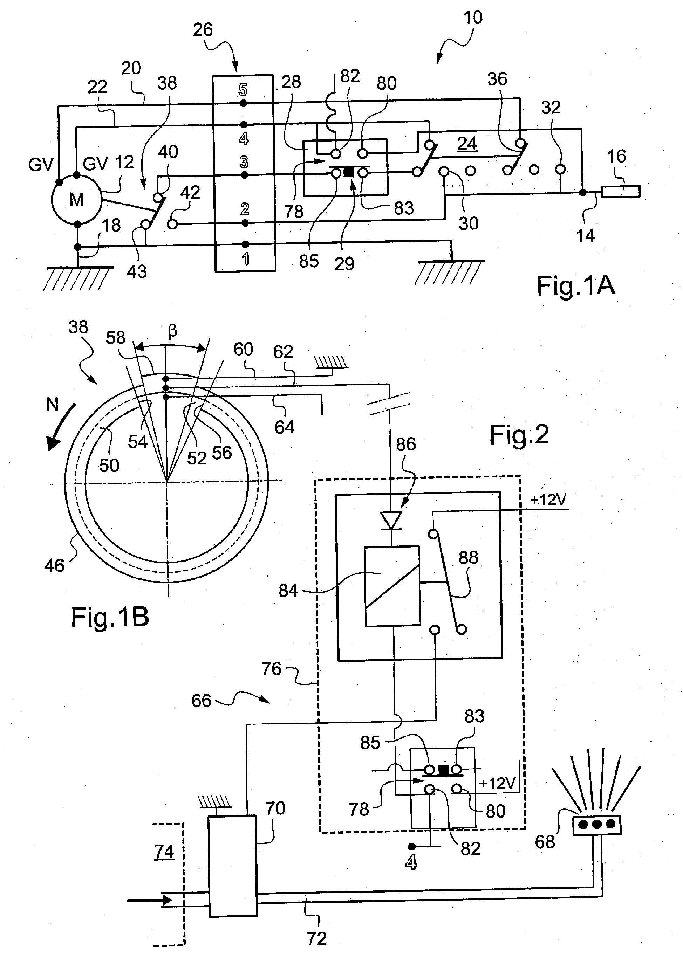

La figure 1A montre le schéma d'un premier circuit de commande 10 permettant de commander en rotation une motorisation 12 incluant un moteur électrique, laquelle motorisation est destinée à entraîner en mouvement alternatif des balais d'essuie-glace d'un véhicule automobile. Les véhicules automobiles comprennent un pare-brise et des balais d'essuie-glace aptes à être entraînés en pivotement contre le pare-brise pour l'essuyer. Usuellement, les balais d'essuie-glace sont portés par deux bras distincts respectivement montés sur deux arbres d'entraînement qui viennent en saillie entre le pare-brise et le capot avant du véhicule automobile selon une direction sensiblement perpendiculaire au pare-brise. Les deux arbres d'entraînement sont couplés à la motorisation 12 précitée par l'intermédiaire d'un système bielle/manivelle de manière à pouvoir être entraînés alternativement dans un sens puis dans l'autre. De la sorte, les balais d'essuie-glace peuvent être entraînés alternativement entre deux positions de point mort opposées, une position de parking dans laquelle ils s'étendent le long du bord inférieur du pare-brise vers le capot avant, et une position d'excursion maximale vers laquelle ils montent et s'étendent sensiblement perpendiculairement audit bord inférieur. En évoluant d'un point mort à l'autre, on notera que les balais d'essuie-glace décrivent contre le pare-brise une surface d'essuyage correspondant à une zone à travers laquelle le conducteur du véhicule automobile observe les événements qui se produisent devant le véhicule. La longueur des balais d'essuyage, l'amplitude de mouvement des arbres d'entraînement et leur position entre le pare-brise et le capot avant du véhicule sont définis de façon à ce que ladite zone soit maximale par rapport à la surface totale du pare-brise.

Le premier circuit de commande 10 comprend, une alimentation en courant électrique comportant une entrée 14 reliée à la borne positive d'une batterie d'accumulateurs non représentée, par l'intermédiaire d'un fusible 16 et une sortie 18 reliée à la masse, soit à la borne négative de ladite batterie d'accumulateurs. Par exemple, l'entrée 14 est portée à un potentiel de +12 V après contact. La masse est alors par définition à un potentiel de 0 V. En outre, il comprend un fil d'entrée grande vitesse 20 et un fil d'entrée petite vitesse 22 sur le moteur électrique de la motorisation 12, lesquels fils d'entrée 20, 22 sont en amont reliés à un connecteur manuel multi-position 24. Il comprend également un bornier d'alvéoles de connectique 26 ainsi qu'un organe de cadencement 28. Il comprend également des moyens de commande manuels 29 que l'on décrira plus en détail ci-après.

Le connecteur manuel multi-position 24 présente deux bornes d'entrée 30, 32 reliées à l'entrée 14 et deux contacteurs mobiles, respectivement reliés, l'un 34 au fil d'entrée petite vitesse 22 et l'autre 36 au fil d'entrée grande vitesse 20. Les deux contacteurs mobiles 34, 36 sont mécaniquement reliés ensemble de manière à pouvoir être étendus dans trois positions distinctes : une première position de repos telle que représentée sur la figure 1A dans laquelle aucun des contacteurs mobiles 34, 36 n'est en contact avec les bornes d'entrée 30, 32 ; une deuxième position active dans laquelle ledit un des contacteurs 34 est connecté à l'une 30 desdites deux bornes d'entrée 30, 32, tandis que ledit autre des contacteurs 36 est libre par rapport à l'autre 32 desdites deux bornes d'entrée 30, 32, et une troisième position active dans laquelle ledit un des contacteurs 34 est libre par rapport à ladite une 30 desdites deux bornes d'entrée 30, 32, tandis que ledit autre des contacteurs 36 est connecté à l'autre 32 desdites deux bornes d'entrée 30, 32. On comprend aisément que dans la première position de repos des contacteurs mobiles 34, 36, le moteur électrique de la motorisation 12 n'est pas alimenté, tandis qu'il l'est dans les deux autres positions, selon un mode en petite vitesse dans la deuxième position active et selon un mode en grande vitesse dans la troisième position active.

Au surplus, le premier circuit de commande 10 comprend un contacteur séquentiel 38 destiné à être commandé par la motorisation 12 entre deux positions de contact. Le contacteur séquentiel 38 présente une première borne d'arrivée 40 apte à être reliée, par l'intermédiaire de l'organe de cadencement 28, et les moyens de commande manuels 29, audit un des contacteurs 34 lorsque celui-ci s'étend dans la première position de repos. Il présente une deuxième borne d'arrivée 42 directement reliée à l'entrée 14 de l'alimentation en courant électrique et une troisième borne d'arrivée 43 reliée à la sortie 18 elle-même conduisant à la masse. Le contacteur séquentiel 38 est destiné à être commandé par la motorisation 12 entre deux états, un premier état où les seules première et troisième bornes d'arrivée 40, 43 sont mises en contact, et un second état où les seules première et deuxième bornes 40, 42 sont mises en contact. Le contacteur séquentiel 38 se trouve dans le premier état lorsque les balais d'essuyage sont dans ladite position de parking, tandis qu'il se trouve dans le second état lorsque les balais d'essuyage sont en dehors de ladite position de parking.

On discutera ci-après des moyens mis en oeuvre pour obtenir ce mode de fonctionnement. Il permet simplement aux balais d'essuyage de revenir dans ladite position de parking pour y demeurer en position fixe tandis que les contacteurs mobiles 34, 36 sont portés dans leur position de repos.

On se reportera sur la figure 1B, montrant en détail le contacteur séquentiel 38, lequel fait parti intégrante du premier circuit de commande 10. Il comprend un anneau conducteur électrique 46 présentant une piste centrale 48 s'étendant sur 360°, une piste intérieure 50 en contact avec la piste centrale 48 et présentant une troncature 52 qui s'étend selon un angle de l'anneau 46 inférieur à 45° par exemple, entre deux extrémités libres en regard 54, 56, et enfin une piste extérieure 58 en saillie de la piste centrale 48 et qui s'étend angulairement à l'intérieur de la troncature 52. En outre, le contacteur séquentiel 38 comporte trois linguets, ou contacts glissants contre les pistes 48, 50 et 58. Un premier linguet 60 est apte à venir en contact avec la piste extérieure 58 et est maintenue radialement en position fixe par rapport à l'anneau conducteur électrique 46. Un deuxième linguet 62 maintenu en contact avec la piste centrale 48. Un troisième linguet 64 apte à venir en contact avec la piste intérieure 50.

Le premier linguet 60 est directement relié à la troisième borne d'arrivée 43 et par conséquent à la masse. Le deuxième linguet 62 est reliée à la première borne d'arrivée 40, tandis que le troisième linguet 64 est relié à la deuxième borne d'arrivée 42 correspondant à l'entrée 14 de l'alimentation en courant électrique du premier circuit de commande 10.

On observera que l'anneau conducteur électrique 46 effectue un tour complet durant une période de mouvement des balais d'essuyage et que dans la position de parking précitée, la piste extérieure 58 est en contact avec le premier linguet 60 de manière à relier électriquement ensemble les premier et deuxième linguets 60, 62, tandis que le troisième linguet 64 est libre par rapport à la piste intérieure 50. En revanche, lorsque les balais d'essuyage sont entraînés en mouvement et s'étendent en dehors de leur position de parking, les deuxième et troisième linguets 62, 64 sont reliés électriquement ensemble, tandis que le premier linguet 60 est libre.

Bien évidemment, lorsque les balais d'essuyage sont entraînés en mouvement durant un temps supérieur à leur période, durant leur passage par la position de parking, séquentiellement, les deuxième et troisième linguets 62, 64 sont tout d'abord déconnectés l'un de l'autre, puis les premier et deuxième linguets 60, 62 sont reliés ensemble pendant un court instant, pour être déconnectés ensuite, tandis que les deuxième et troisième linguets 62, 64 sont à nouveau reliés. Cette séquence de connexion et de déconnexion, n'altère en rien le mouvement continu des balais d'essuyage lorsqu'ils passent par la position de parking.

Comme on l'a expliqué ci-dessus, ces caractéristiques permettent aux balais d'essuyage de revenir à la position de parking pour s'y immobiliser lorsque les contacteurs 34, 36 sont portés dans leur première position de repos.

Par ailleurs, et selon une caractéristique de l'invention, le deuxième linguet 62 est relié à un ensemble de lave-glace 66 que l'on va décrire ci-après en référence à la figure 2. Il comprend des gicleurs 68 orientés vers le pare-brise et plus précisément vers la surface d'essuyage précitée. Les gicleurs peuvent être embarqués sur les balais d'essuyage ou bien être installés en position fixe entre le capot avant et le pare-brise. Ils sont par ailleurs reliés à une pompe d'alimentation 70 par l'intermédiaire d'un conduit 72, laquelle pompe d'alimentation 70 est elle-même reliée à un réservoir de liquide de lavage 74. L'ensemble de lave-glace 66 comprend également un second circuit de commande 76 pour commander la pompe d'alimentation 70. Le second circuit de commande 76 comporte un bouton-poussoir 78 dont une borne de bouton 80 est reliée à la borne positive de la batterie d'accumulateurs et dont l'autre borne de bouton 82 est reliée, d'une part à la bobine d'un relais temporisé 84, et d'autre part à la quatrième alvéole de connectique du bornier d'alvéoles de connectique 26. Le bouton-poussoir 78 est par exemple installé sous le volant de conduite du véhicule automobile. Au surplus, le bouton-poussoir 78 fait partie des moyens de commande manuels 29 et lorsqu'il est au repos, comme illustré sur la figure 2, il permet de relier électriquement ledit un des contacteurs 34 et la première borne d'arrivée 40 en reliant deux bornes de repos 83, 85.

Le relais temporisé 84 est réglable, de manière à rester fermé pendant une durée comprise par exemple entre une et trois secondes. On réglera la temporisation du relais temporisé 84, de manière à ce qu'il demeure fermé pendant un temps inférieur ou égal à une demi-période de mouvement des balais d'essuyage.

La bobine du relais temporisé 84 est également reliée électriquement au deuxième linguet 62 par l'intermédiaire d'une diode 86 permettant d'éviter les retours de courant vers le premier circuit de commande 10. Quant au relais temporisé 84, il présente un contact mobile 88 relié à la borne positive de la batterie d'accumulateurs et donc apte à être porté à un potentiel de +12 V. Ce contact mobile 88 est apte à être commuté avec la pompe d'alimentation 70 lorsque la bobine du relais temporisé 84 est alimentée. On observera que la pompe d'alimentation 70 présente une entrée reliée à la masse.

Ainsi, grâce à la liaison électrique entre le relais temporisé 84 et le deuxième linguet 62, le contact mobile 88 est entraîné pour fermer le circuit de la pompe d'alimentation 70 à la double condition que, le bouton-poussoir 78 soit enfoncé pour d'un côté porter la bobine du relais temporisé 84 au potentiel de +12 V et que, le deuxième linguet 62 soit mis à la masse pour porter l'autre côté de la bobine au potentiel nul. Or, ces dernières conditions ne sont remplies que lorsque les balais d'essuyage sont dans leur position de parking et que le deuxième linguet 62 est connecté au premier linguet 60 par l'intermédiaire de la piste centrale 48 et de la piste extérieure 58. L'anneau conducteur électrique 46 représenté sur la figure 1B est dans une position angulaire correspondant à cet état.

La commande de lavage du pare-brise est alors activée par le conducteur qui agit sur le bouton-poussoir 78. Lorsqu'il y procède, on observera que les deux bornes de repos 83, 85 sont déconnectées tandis que les deux bornes de bouton 82, 80 sont elles, connectées.

Cependant, la pompe d'alimentation en liquide de lavage n'est mise sous tension que lorsque les balais d'essuyage s'étendent au repos dans leur position de parking ou bien rejoignent cette position pour la quitter ensuite lorsque la motorisation 12 demeure en fonctionnement. La bobine du relais temporisé 84 est alors d'un côté mise à la masse et portée à une valeur de potentiel nulle car la piste centrale 48 est elle-même mise à la masse, tandis que la bobine est de l'autre côté portée un potentiel de plus de 12 V grâce à l'activation du bouton-poussoir 78. Le contact mobile 88 demeurera commuté avec la pompe d'alimentation 70 durant un temps sensiblement équivalent à une demi-période de mouvement des balais d'essuyage, soit simplement à la montée des balais d'essuyage.

On observera ici, que lorsque les balais d'essuyage s'étendent dans leur position de parking, tandis que ledit un des contacteurs 34 illustré sur la Figure 1A s'étend dans la première position de repos et que le bouton-poussoir 78 est enfoncé, non seulement la pompe d'alimentation en liquide lavage est mise sous tension, mais au surplus la quatrième alvéole de connectique du bornier d'alvéoles de connectique 26 correspondant au fil d'entrée petite vitesse 22, est également mise sous tension. En conséquence, les balais d'essuyage son entraînés en mouvement durant au moins un cycle selon le mode petite vitesse.

Si toutefois le conducteur agit sur le bouton-poussoir 78, alors que les balais d'essuyage sont en mouvement en dehors de la position de parking, la bobine du relais temporisé 84 n'est pas mise sous tension, car le deuxième linguet 62 est alors porté à un potentiel de +12 V par l'intermédiaire de la piste intérieure 50 et de la piste centrale 48. Les deux extrémités de la bobine du relais temporisé 84 étant alors au même potentiel positif, le relais temporisé 84 n'est pas activé et le contact mobile 88 demeure dans sa position de repos.

Toutefois, si le conducteur maintient le bouton-poussoir 78, dès lors que les balais d'essuyage atteignent la position de parking, une différence de potentiel apparaît aux bornes de la bobine du relais temporisé 84 et le contact mobil 88 est commuté avec la pompe d'alimentation 70 et les gicleurs 68 sont alimentés en liquide de lavage.

On observera que la diode 86 préserve les bobinages du moteur électrique de la motorisation 12 de tout retour de courant induit par la bobine du relais temporisé 84.

Par ailleurs, un clapet anti-retour est préférentiellement installé dans le conduit 72 entre les gicleurs 68 et la pompe d'alimentation 70 de manière à améliorer précisément le temps de réaction de la pompe 70. En effet, le clapet anti-retour permet de maintenir du liquide de lavage dans le conduit 72, et partant, dès lors que la pompe d'alimentation 70 est activée, le liquide de lavage est projeté à travers les gicleurs 68.

Ainsi, le lavage du pare-brise peut être mis en oeuvre dans une unique phase de montée des balais d'essuyage, correspondant à une première demi période de mouvement des balais d'essuyage, tandis qu'il cesse automatiquement lorsque les balais d'essuyage reviennent vers leur position de parking, dans la demi-période suivante. De la sorte, non seulement la consommation en liquide de lavage est diminuée, mais au surplus cette portion de liquide de lavage est projetée dans la phase la plus efficace d'essuyage.

Compte tenu que le lavage n'est commandé qu'en phase montante des balais, le système est particulièrement efficace si les gicleurs sont embarqués sur le bras et envoient le liquide de lavage sur la partie du pare-brise qui va être essuyée, le liquide étant alors évacué en dehors du champ de vision du conducteur.

## Revendications

1. Dispositif d'essuie-glace et de lave-glace de véhicule automobile comprenant, d'une part, des balais et une motorisation (12) pour entraîner lesdits balais en mouvement alternatif entre deux positions de point mort opposées, lesdits balais décrivant une surface d'essuyage entre lesdites deux positions, et d'autre part, des gicleurs (68) destinés à être orientés vers ladite surface d'essuyage et une pompe d'alimentation (70) desdits gicleurs en liquide de lavage pour projeter ledit liquide de lavage vers ladite surface d'essuyage, ledit dispositif d'essuie-glace et de lave-glace comprenant en outre, un premier circuit de commande (10) pour commander ladite motorisation (12), et un second circuit de commande (76) pour commander ladite pompe (70), ledit second circuit de commande (76) présentant un contacteur activable (78) pour alimenter ledit second circuit de commande en courant électrique ;
**caractérisé en ce que** lesdits circuits de commande (10, 76) sont couplés électriquement l'un avec l'autre ;
et **en ce que** ladite pompe (70) est commandée lorsque ledit contacteur activable (78) est activé et que simultanément lesdits balais sont dans au moins une desdites deux positions de point mort.

2. Dispositif d'essuie-glace et de lave-glace selon la revendication 1, **caractérisé en ce que** ledit second circuit de commande (76) comporte un relai électromagnétique (84) pour commander ladite pompe (70).

3. Dispositif d'essuie-glace et de lave-glace selon la revendication 2, **caractérisé en ce que** ledit relai électromagnétique (84) est un relai temporisé.

4. Dispositif d'essuie-glace et de lave-glace selon la revendication 3, **caractérisé en ce que** la durée de temporisation dudit relai temporisé (84) est inférieure ou égale à la demi-période de mouvement desdits balais.

5. Dispositif d'essuie-glace et de lave-glace selon l'une quelconque des revendications 2 à 4, **caractérisé en ce que** ledit second circuit de commande (76) comporte une diode (86) entre ledit relai électromagnétique (84) et ledit premier circuit de commande (10).

6. Dispositif d'essuie-glace et de lave-glace selon l'une quelconque des revendications 1 à 5, **caractérisé en ce que** ledit premier circuit de commande (10) présente un contacteur séquentiel (38) destiné à faire varier le potentiel électrique dudit second circuit de commande (76) lorsque lesdits balais sont entraînés d'une position située entre lesdits points morts à ladite au moins une desdites deux positions de point mort.

7. Dispositif d'essuie-glace et de lave-glace selon la revendication 6, **caractérisé en ce que** ledit contacteur séquentiel (38) présente des pistes circulaires conductrices (48, 50, 58) solidaires et des linguets de contact (60, 62, 64) correspondants, lesdites pistes étant destinées à être entraînée en rotation de 360° lorsque lesdits balais sont entraînés en mouvement durant une période.

8. Dispositif d'essuie-glace et de lave-glace selon l'une quelconque des revendications 1 à 7, **caractérisé en ce que** ladite au moins une desdites deux positions de point mort est une position dans laquelle lesdits balais sont aptes à venir s'étendre au repos.

9. Dispositif d'essuie-glace et de lave-glace selon l'une quelconque des revendications 1 à 8, **caractérisé en ce que** lesdits gicleurs (68) sont montés solidaires desdits balais d'essuyage.

## Patentansprüche

1. Windschutzscheibenwischer und Scheibenwaschanlage für Kraftfahrzeug, die einerseits Scheibenwischerblätter und eine Motorisierung (12) zum Antreiben der Scheibenwischerblätter in abwechselnder Bewegung zwischen zwei entgegengesetzten Totpunktpositionen umfasst, wobei die Scheibenwischerblätter eine Wischoberfläche zwischen den zwei Positionen beschreiben, und, andererseits, Spritzdüsen (68), die dazu bestimmt sind, zu der Wischoberfläche gerichtet zu sein, und eine Zuführpumpe (70) der Spritzdüsen für Waschflüssigkeit, um die Waschflüssigkeit zu der Wischoberfläche zu spritzen, wobei die Windschutzscheibenwischer und die Scheibenwaschanlage außerdem eine erste Steuerschaltung (10) zum Steuern der Motorisierung (12) umfassen, und eine zweite Steuerschaltung (76), um die Pumpe (70) zu steuern, wobei die zweite Steuerschaltung (76) einen betätigbaren Schalter (78) zum Versorgen der zweiten Steuerschaltung mit elektrischem Strom aufweist,
**dadurch gekennzeichnet, dass** die Steuerschaltungen (10, 76) elektrisch miteinander gekuppelt sind,
und dass die Pumpe (70) gesteuert wird, wenn der betätigbare Schalter (78) aktiviert wird und die Scheibenwischerblätter gleichzeitig in mindestens einer der zwei Totpunktpositionen sind.

2. Windschutzscheibenwischer und Scheibenwaschanlage nach Anspruch 1, **dadurch gekennzeichnet, dass** die zweite Steuerschaltung (76) ein elektromagnetisches Relais (84) zum Steuern der Pumpe (70) umfasst.

3. Windschutzscheibenwischer und Scheibenwaschanlage nach Anspruch 2, **dadurch gekennzeichnet, dass** das elektromagnetische Relais (84) ein verzögertes Relais ist.

4. Windschutzscheibenwischer und Scheibenwaschanlage nach Anspruch 3, **dadurch gekennzeichnet, dass** die Verzögerungsdauer des verzögerten Relais (84) kleiner oder gleich der halben Bewegungsperiode der Scheibenwischerblätter ist.

5. Windschutzscheibenwischer und Scheibenwaschanlage nach einem der Ansprüche 2 bis 4, **dadurch gekennzeichnet, dass** die zweite Steuerschaltung (76) eine Diode (86) zwischen dem elektromagnetischen Relais (84) und der ersten Steuerschaltung (10) aufweist.

6. Windschutzscheibenwischer und Scheibenwaschanlage nach einem der Ansprüche 1 bis 5, **dadurch gekennzeichnet, dass** die erste Steuerschaltung (10) einen Folgeschalter (38) aufweist, der dazu bestimmt ist, die elektrische Spannung der zweiten Steuerschaltung (76) variieren zu lassen, wenn die Scheibenwischerblätter von einer Position, die zwischen den Totpunkten liegt, zu der mindestens einen der zwei Totpunktpositionen angetrieben werden.

7. Windschutzscheibenwischer und Scheibenwaschanlage nach Anspruch 6, **dadurch gekennzeichnet, dass** der Folgeschalter (38) fest verbundene kreisförmige leitende Bahnen (48, 50, 58) sowie entsprechende Kontaktlaschen (60, 62, 64) aufweist, wobei die Bahnen dazu bestimmt sind, in Drehung um 360° angetrieben zu werden, wenn die Scheibenwischerblätter während einer Periode in Drehung angetrieben werden.

8. Windschutzscheibenwischer und Scheibenwaschanlage nach einem der Ansprüche 1 bis 7, **dadurch gekennzeichnet, dass** die mindestens eine der zwei Totpunktpositionen eine Position ist, in der die Scheibenwischerblätter geeignet sind, sich in Ruhestellung zu erstrecken.

9. Windschutzscheibenwischer und Scheibenwaschanlage nach einem der Ansprüche 1 bis 8, **dadurch gekennzeichnet, dass** die Spritzdüsen (68) fest mit den Scheibenwischerblättern verbunden montiert sind.

## Claims

1. Motor vehicle windshield wiper and windshield washer device including, on the one hand, wipers and a motor-drive (12) for driving said wipers in alternating movement between two opposite neutral positions, said wipers sweeping out a wiping area between said two positions, and, on the other hand, nozzles (68) adapted to be oriented towards said wiping area and a pump (70) for feeding said nozzles with washing liquid so as to spray said washing liquid towards said wiping area, said windshield wiper and windshield washer device further including a first control circuit (10) for controlling said motor-drive (12) and a second control circuit (76) for controlling said pump (70), said second control circuit (76) including a selectively activated contactor (78) for feeding said second control circuit with electrical current;
**characterized in that** said control circuits (10, 76) are electrically coupled to each other;
and **in that** said pump (70) is commanded when said selectively activated contactor (78) is activated and said wipers are simultaneously in at least one of said two neutral positions.

2. Windshield wiper and windshield washer device according to Claim 1, **characterized in that** said second control circuit (76) includes an electromagnetic relay (84) for controlling said pump (70).

3. Windshield wiper and windshield washer device according to Claim 2, **characterized in that** said electromagnetic relay (84) is a delayed action relay.

4. Windshield wiper and windshield washer device according to Claim 3, **characterized in that** the time-delay of said delayed action relay (84) is less than or equal to the half-period of the movement of said wipers.

5. Windshield wiper and windshield washer device according to any one of Claims 2 to 4, **characterized in that** said second control circuit (76) includes a diode (86) between said electromagnetic relay (84) and said first control circuit (10).

6. Windshield wiper and windshield washer device according to any one of Claims 1 to 5, **characterized in that** said first control circuit (10) includes a sequential contactor (38) adapted to vary the electrical potential of said second control circuit (76) when said wipers are driven from a position situated between said neutral positions to said at least one of said two neutral positions.

7. Windshield wiper and windshield washer device according to Claim 6, **characterized in that** said sequential contactor (38) includes attached circular conductive tracks (48, 50, 58) and corresponding contact tongues (60, 62, 64), said tracks being adapted to be driven in rotation through 360° when said wipers are driven in movement for one period.

8. Windshield wiper and windshield washer device according to any one of Claims 1 to 7, **characterized in that** said at least one of said two neutral positions is a position in which said wipers are adapted to come to extend when idle.

9. Windshield wiper and windshield washer device according to any one of Claims 1 to 8, **characterized in that** said nozzles (68) are mounted on and attached to said wipers.
